# EUROPÄISCHE PATENTSCHRIFT

(11) **EP 3 560 804 B1**
(45) Veröffentlichungstag und Bekanntmachung des Hinweises auf die Patenterteilung: **28.07.2021**
(21) Anmeldenummer: 19164933.4
(22) Anmeldetag: 25.03.2019
(51) Int. Cl.: B62J 6/02, F21S 41/30

(54) **SCHEINWERFER MIT ZEICHEN, INSBESONDERE LOGO**
HEADLAMP WITH CHARACTERS, ESPECIALLY LOGO
PHARE POURVU DE SIGNES, EN PARTICULIER LOGO

(30) Priorität: 25.04.2018 DE 202018002106 U
(43) Veröffentlichungstag der Anmeldung: 30.10.2019
(73) Patentinhaber: Büchel GmbH & Co. Fahrzeugteilefabrik KG, 36039 Fulda (DE)
(72) Erfinder: Büchel, Erhard, 36043 Fulda (DE)
(74) Vertreter: Sawodny, Michael-Wolfgang

(56) Entgegenhaltungen:
- DE-U- 1 967 707
- JP-A- 2002 274 253
- US-A- 5 245 515
- US-A1- 2011 310 610

## Beschreibung

Die Erfindung betrifft einen Scheinwerfer für ein Zweirad, insbesondere ein Fahrrad mit einem Gehäuse sowie wenigstens einer im Gehäuse angeordneten Lichtquelle.

Scheinwerfer für ein Fahrrad bspw. mit Tagfahrlichtfunktion sind aus einer Vielzahl von Anmeldungen bekannt geworden. So zeigt die DE 20 2010 018 007 U1 einen Scheinwerfer für ein Zweirad, mit einer Hauptlichtquelle, die mit einer ersten Hauptstromstärke in einem Tagfahrmodus und mit einer zweiten Hauptstromstärke in einem Nachtfahrmodus betreibbar ist. Des Weiteren umfasst der Scheinwerfer gemäß der DE 20 2010 018 007 U1 eine Sekundärlichtquelle, die mit einer Sekundärstromstärke in einem Tagfahrmodus betreibbar ist. Der aus der DE 20 2010 018 007 U1 bekannte Scheinwerfer weist nur eine einzige Lichtquelle für die Nachtfahrt auf, die in Form eines Abblendlichtes ausgebildet ist, auf. Ein Fernlicht ist nicht bekannt. Der aus der DE 20 2010 018 007 U1 bekannte Scheinwerfer hat in einer Entfernung von 10 m vom Scheinwerfer eine Lichtleistung von 40 Lux und mehr und verbessert auf diese Art und Weise die Sicht bei Nachtfahrten. Allerdings ergeben sich Probleme bei der frühen Erkennung von entfernt liegenden Hindernissen.

Aus der DE 20 2016 101 707 U1 ist ein Scheinwerfer für ein Fahrrad bekannt geworden, umfassend ein Leuchtmittel, dessen Licht zumindest teilweise aus dem Scheinwerfer austreten kann, wobei der Scheinwerfer so gestaltet ist, dass die Lichtverteilung des aus dem Scheinwerfer austretenden Lichtes verändert werden kann. Obwohl in der DE 20 2016 101 707 U1 ein Scheinwerfer mit Steuermitteln bekannt geworden ist, der als dynamisierter Scheinwerfer ausgelegt ist und die Lichtverteilung und die Lichtqualität gesteuert werden können, ist aus der DE 20 2016 101 707 U1 kein Scheinwerfer bekannt geworden, der über eine umschaltbare Fernlicht- und Abblendlichtfunktion verfügt. Ein weiterer Nachteil der DE 20 2016 101 707 U1 ist, dass der Aufbau kompliziert und aufwendig ist.

Bei sämtlichen Scheinwerfer, die aus der DE 20 2010 018 007 U1 oder der DE 20 2016 101 707 U1 bekannt sind waren die Lichtquellen in einem vorzugsweise intransparenten Gehäuse untergebracht. Wenn die Scheinwerfer mit einer Beschriftung, einem Zeichen oder einem Logo versehen wurden, so geschah dies durch Bedrucken des Gehäuses beispielsweise im Siebdruck.

Aus der DE1967707 U, die alle Merkmale des Oberbegriffs des Anspruchs 1 offenbart, ist ein Fahrradscheinwerfer bekannt geworden, der ein durchscheinendes Zwischenstück umfasst aus dem seitlich bzw. quer zur Fahrtrichtung Licht austreten kann, so dass ein Radfahrer auch senkrecht zu seiner Fahrtrichtung erkennbar ist.

Die US 5,245, 515 B zeigt einen Frontscheinwerfer mit einem transparenten Ring aus dem Licht seitlich austreten kann.

Aufgabe der Erfindung ist es somit, die Nachteile des Standes der Technik zu überwinden und einen Scheinwerfer für ein Zweirad anzugeben, der diese Nachteile vermeidet. Insbesondere soll ein Scheinwerfer angegeben werden, der ein ausgeleuchtetes Zeichen, bspw. ein ausgeleuchtetes Logo zeigt.

Erfindungsgemäß wird diese Aufgabe durch einen Scheinwerfer gemäß Anspruch 1 gelöst.

Der erfindungsgemäße Scheinwerfer für ein Zweirad umfasst wenigstens ein Gehäuse und wenigstens eine im Gehäuse angeordnete Lichtquelle. Das Gehäuse ist derart ausgebildet , dass das Gehäuse wenigstens teilweise aus einem für sichtbares Licht transparenten Material, beispielsweise PMMA besteht. Das für Licht, insbesondere sichtbares Licht transparente Gehäuse ist zumindest teilweise mit einer für Licht, insbesondere sichtbares Licht im sichtbaren Wellenlängenbereich ab 400 nm, intransparenten Beschichtung versehen, wobei die intransparente Beschichtung zur Darstellung eines Zeichens von dem Gehäuse entfernt ist, derart, dass das sichtbare Licht das Zeichen, insbesondere das Logo, bevorzugt den Schriftzug ausleuchten kann. Dies ist möglich, weil das Licht der Lichtquelle zumindest teilweise, bevorzugt vollständig durch das transparente Zeichen, das heißt das Logo, bevorzugt den Schriftzug der in die Beschichtung des Gehäuses eingebracht ist, hindurchtritt. Hierdurch wird das in die Beschichtung eingebracht Logo bzw. der Schriftzug beleuchtet. Das Gehäuse ist bevorzugt wasserdicht ausgebildet. Erfindungsgemäß ist das Material des transparenten Gehäuses PMMA, in das eine Lasergravur eingebracht ist.

Besonders bevorzugt ist es, wenn der Scheinwerfer einen Reflektor zur Bündelung der Lichtquelle umfasst. Ein derartiger Reflektor dient im Wesentlichen dazu, das Licht zu sammeln, so dass das Licht aus dem Scheinwerfer nach vorne abstrahlt. Bevorzugt ist der Reflektor so ausgebildet, dass das Licht als Front- und/oder als Rücklicht die Erfordernisse der StVZO erfüllt. Bevorzugt ist der Reflektor so ausgebildet, dass er auch Licht in Richtung des Gehäuses lenkt und zwar genau in den Bereich, in dem in das Gehäuse das Zeichen, bzw. Logo eingebracht ist. Das in den Bereich des Zeichens bzw. Logos umgelenkte Licht, das bevorzugt nur ein Teil des im Gehäuse erzeugten Lichtes ist, wird dann durch das Logo hindurch abgestrahlt und so das Logo beleuchtet.

Ganz besonders bevorzugt ist es, wenn der komplette Reflektor von dem Gehäuse umschlossen wird. In einer ersten Ausgestaltung der Erfindung ist vorgesehen, dass die Beschichtung eine Primer- Lackierung umfasst, auf die eine intransparente Lackierung, bevorzugt eine schwarze Lackierung aufgebracht ist. Eine Primer-Lackierung, die einen Haftvermittler kennzeichnet, kommt in der Regel dann zum Einsatz, wenn schwer zu beschichtende Untergründe lackiert oder in anderer Weise beschichtet werden sollen. Die Wirksamkeit des Haftvermittlers wird über seine Haftstärke bzw. Haftfestigkeit definiert, also das Maß für den Widerstand einer Beschichtung gegen ihre mechanische Trennung vom Untergrund. Durch eine Steigerung der Haftfestigkeit bekommen Lacke z.B. eine verbesserte Resistenz gegenüber Chemikalien und anderen Umwelteinflüssen. Primer-Lackierungen werden in vielen Anwendungen eingesetzt.

Selbstverständlich könnte die zu entfernende Lackierung auch ohne einen Haftvermittler in einer alternativen Ausführungsform direkt auf den Kunststoff des Gehäuses aufgebracht werden.

Bevorzugt ist der Kunststoff des Gehäuses transparent, insbesondere PMMA.

Der Reflektor sorgt dafür, das Licht nur an der Stelle aus dem Gehäuse austritt, an der das Zeichen oder Logo in die Beschichtung des Gehäuses durch Entfernen der Beschichtung eingebracht ist.

In einer besonders bevorzugten Ausgestaltung der Erfindung ist vorgesehen, dass das Gehäuse zweigeteilt ist, nämlich in einen ersten und zweiten Gehäuseteil, wobei lediglich ein erster Gehäuseteil, der den Reflektor umschließt das Zeichen aufweist. Der zweite Gehäuseteil haust lediglich die Lichtquelle ein und verhindert, dass diese nach außen abstrahlt. Um das erste Gehäuseteil an den Reflektor anzupassen ist es vorteilhaft, wenn das erste Gehäuseteil ringförmig ausgebildet ist. Als Lichtquelle findet bevorzugt eine LED Verwendung, die eine Leistung von mindestens 10 Lux, bevorzugt eine Leistung im Bereich 10 Lux bis 150 Lux abstrahlt. Eine Lichtquelle mit einem derartigen breiten Leistungsumfang der Abstrahlung kann sowohl als Abblendlicht und/oder Fernlicht und/oder als Tagfahrlicht eingesetzt werden, je nachdem welche Funktion gewünscht wird. Insbesondere werden die Erfordernisse der StVZO erfüllt. Um das Fahrrad besser erkenntlich zu machen, ist vorgesehen, dass der Scheinwerfer zusätzlich einen Außenreflektor umfasst, der bei Anstrahlung Licht reflektiert.

Neben dem erfindungsgemäßen Scheinwerfer gibt die Erfindung auch ein Verfahren zum Einbringen eines Zeichens in die intransparente Beschichtung eines Gehäuses an. Bevorzugt wird die intransparente Beschichtung des Gehäuses abgetragen, so dass durch Abtragen der intransparenten Beschichtung das Logo in die Beschichtung des Gehäuses eingebracht wird. Das Abtragen kann durch Abkratzen und/oder Abschaben erfolgen. Hierbei wird die intransparente Beschichtung inkl. die Haftvermittlerschicht abgetragen, so dass das Grundmaterial hervortritt. Mit Hilfe von Lasern ist ebenfalls in einer alternativen Ausführungsform ein gezielter Farbabtrag von beschichteten Gegenständen möglich, so dass die darunterliegende Farbe der Gegenstände hervortritt.

Gemäß der Erfindung werden transparente Kunststoffe eingesetzt, die in der gewünschten Farbe lackiert werden. Mit dem Laserstrahl des Lasers wird dann das gewünschte Logo oder Zeichen aus der Lackoberfläche "herausgebrannt". Die Vorteile des Abtragens mit Laser liegen in der sehr kurzen Vorbereitungszeit bei Änderungen der Symbolik und in der Robustheit des Abtragens. Der Laser stellt eine prozesssichere Möglichkeit des Abtragens dar. Wenn das Material des Gehäuses PMMA ist, lassen sich beispielsweise zusätzlich zum Abtrag bei Verwendung beispielsweise eines Kohlendioxidlasers auch Gravuren in das Material des Gehäuses, insbesondere PMMA einbringen. Lasergravuren in PMMA sind nicht verfärbt, sie bilden einen Kontrast lediglich aufgrund ihrer Lichtstreuung (raue Oberfläche). Sie können mittels Beleuchtung der Materialkante von innen beleuchtet werden, so dass ausschließlich die Gravuren in einer ansonsten transparenten Platte leuchten. Zur besonders kontrastreichen Laserbeschriftung von PMMA eignet sich Material in gegossener Qualität, kurz PMMA-"GS" oder PMMA "Cast".

Die Verwendung von Laserlicht zum Abtragen der Beschichtung und/oder Einbringen von Lasergravuren ermöglicht es, sehr feine Konturen des Zeichens auf dem Gehäuse des Scheinwerfers einzugravieren. Bevorzugt wird die Beschichtung des Gehäuses soweit abgetragen, dass das transparente Material des Gehäuses zum Vorschein kommt, durch den dann das Licht hindurch tritt und über das Zeichen abgestrahlt wird.

Nachfolgend soll die Erfindung anhand der Figuren beispielhaft beschrieben werden.

Es zeigen:
- Fig. 1: einen Scheinwerfer gemäß der Erfindung
- Fig. 2: den Reflektor des Scheinwerfers und das auf dem Reflektor angebrachte Gehäuseteil mit Beschichtung und eingebrachtem Zeichen
- Fig.3: eine detaillierte Ansicht des auf den Reflektor angebrachten Gehäuseteils

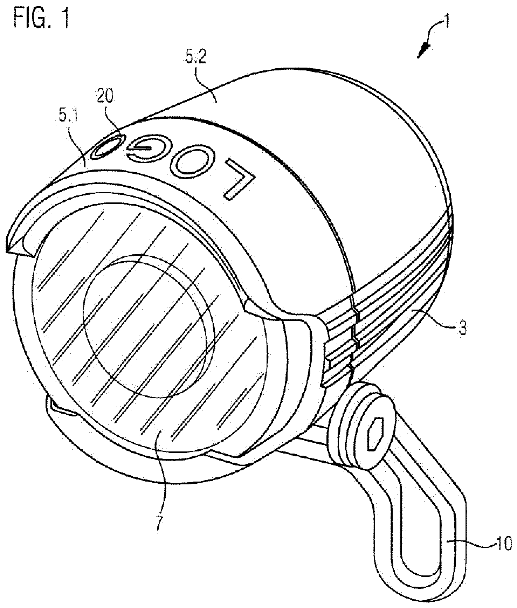

Figur 1 zeigt einen erfindungsgemäßen Scheinwerfer 1 mit einem Gehäuse 3. Das Gehäuse 3 ist in der dargestellten Ausführungsform zweigeteilt und umfasst ein erstes Gehäuseteil 5.1 und ein zweites Gehäuseteil 5.2. An der Frontscheibe des Scheinwerfers ist ein Reflektor 7 angeordnet, der von dem Gehäuse umfasst wird. Der Reflektor 7 bündelt das Licht der in dem Gehäuseteil 5.2 angeordneten Lichtquelle und lenkt es nach vorne auf den auszuleuchtenden Bereich, bspw. den Fahrweg oder die Straße. Bevorzugt ist Lichtquelle und Reflektor so ausgebildet, dass das nach vorne abgestrahlte Licht den Anforderungen der StVZO für einen Frontscheinwerfer genügt. Am Gehäuse selbst ist eine Befestigung 10 zur Befestigung des Scheinwerfers vorgesehen. Der Scheinwerfer 1 umfasst eine erfindungsgemäß in die Oberfläche des Gehäuses 3 eingebrachtes Zeichen, insbesondere ein Logos 20.

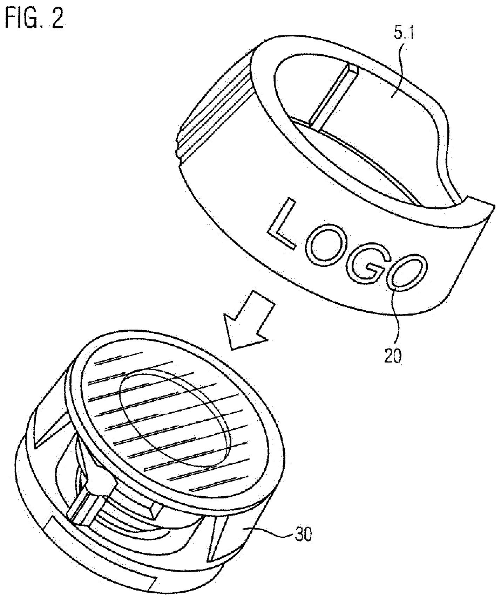

Wie aus Figur 1 erkenntlich, wird das Zeichen, bzw. Logo in das Gehäuse eingebracht und zwar dadurch, dass die Beschichtung des Gehäuses, die vorliegend schwarz ohne Beschränkung hierauf ist, entfernt wird, so dass Licht aus dem Scheinwerfer durch das transparente Substrat, das mit der Beschichtung versehen ist, hindurchtreten kann. Auf diese Art und Weise wird erreicht, dass das Logo durch die Lichtquelle im Gehäuse des Scheinwerfers ausgeleuchtet wird. Die Einbringung des Logos ist in Figur 2 detailliert dargestellt.

In Figur 2 ist das als Ring ausgebildete erste Gehäuseteil 5.1, in dass das Zeichen, insbesondere das Logo eingebracht wird gezeigt. Das Grundmaterial des ersten Gehäuseteils ist ein transparentes Material, beispielsweise PMMA, das mit einer intransparenten Beschichtung, beispielsweise einer schwarzen Beschichtung versehen wird. Unter intransparenter Beschichtung wird verstanden, dass kein Licht, insbesondere im sichtbaren Wellenlängenbereich durch die Beschichtung hindurchtreten kann. Der ringförmige erste Gehäuseteil umgibt den in Figur 2 dargestellten Reflektor 30, der dazu dient, Licht der Lichtquelle, die bevorzugt in dem zweiten Gehäuseteil angeordnet ist, zu sammeln und zu bündeln, so dass ein Bereich einer Straße, bevorzugt gemäß StVZO, ausgeleuchtet wird. Zusätzlich ist der Reflektor 30 derart ausgeführt, dass nicht nur Licht nach vorne auf die Fahrbahn abgestrahlt wird, sondern auch Licht in Richtung des ersten Gehäuseteils nach oben abgelenkt wird, so dass das Licht der Lichtquelle auch das Logo ausleuchtet.

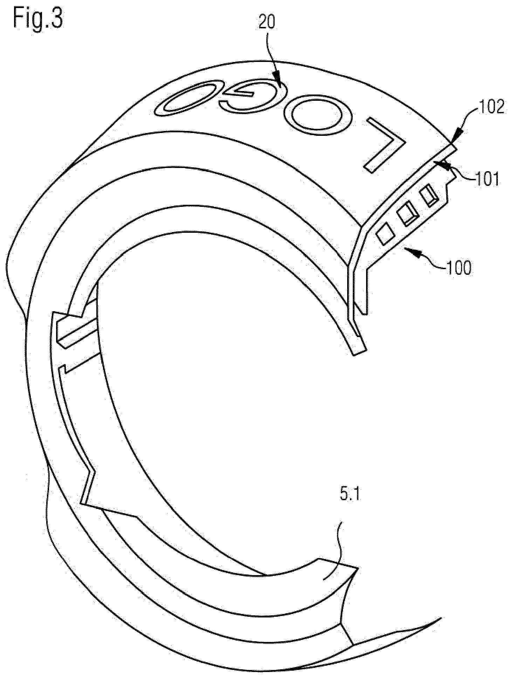

Figur 3 zeigt nochmals detailliert, das erste Gehäuseteil 5.1, in den das Logo eingebracht wird im Schnitt. Wie schon in den Figuren 1 und 2 dargestellt, ist das erste Gehäuseelement im Wesentlichen ringförmig ausgeführt. Das erste Gehäuseelement besteht aus einem transparenten Material 100, bevorzugt PMMA. Auf das transparente Material wird bei der dargestellten Ausgestaltung ein Grundlack, ein sogenannter Primer Lack 101 oder Haftvermittler aufgebracht. Auf den Primer Lack wiederrum, wird erfindungsgemäß ein intransparenter Lack, beispielsweise ein schwarzer Lack 102 aufgebracht, so dass keinerlei Licht durch das transparente Material des ersten Gehäuseteils hindurchtreten und nach außen austreten kann. Lediglich im Bereich des Zeichens 20 ist die Beschichtung bspw. durch Anwendung von Laser, bspw. Laser-Ablation entfernt, so dass das transparente Grundmaterial des ersten Gehäuseteils freigelegt wird. Durch dieses transparente Grundmaterial kann dann Licht der Lichtquelle austreten und das Zeichen, insbesondere Logo beleuchten.

Mit der Erfindung wird erstmals ein Scheinwerfer angegeben, der anstelle eines aufgedruckten Zeichens, insbesondere ein beleuchtetes Zeichen, in Form eines Logos offenbart.

## Patentansprüche

1. Scheinwerfer (1) für ein Zweirad, insbesondere ein Fahrrad, umfassend wenigstens ein Gehäuse sowie wenigstens eine im Gehäuse angeordnete Lichtquelle,
wobei zumindest ein Teil des Gehäuses aus einem für Licht, insbesondere sichtbarem Licht, transparenten Material besteht und wenigstens ein Tei des Gehäuses mit einer für Licht, insbesondere sichtbarem Licht, intransparenten Beschichtung (102) versehen ist, wobei die intransparente Beschichtung (102) zur Darstellung eines Zeichens vom Gehäuse entfernt ist, derart dass das Zeichen, insbesondere ein Logo (20), bevorzugt ein Schriftzug durch die wenigstens eine Lichtquelle durch das transparente
Material hindurch ausgeleuchtet wird,
**dadurch gekennzeichnet, dass**
die Beschichtung eine intransparente Lackierung, insbesondere eine für sichtbares Licht intransparente Lackierung, insbesondere eine schwarze Lackierung (102) und eine Primer Lackierung (101), umfasst und die Beschichtung, insbesondere die intransparente Lackierung (102), bevorzugt und/oder auch die Primer Lackierung (101) durch einen Laser entfernbar ist, wobei das transparente Material des Gehäuses PMMA ist und eine
Lasergravur in das transparente Material des Gehäuses eingebracht ist

2. Scheinwerfer nach Anspruch 1,
**dadurch gekennzeichnet, dass**
das PMMA ein PMMA in gegossener Qualität ist.

3. Scheinwerfer nach Anspruch 1 oder 2,
**dadurch gekennzeichnet, dass**
der Laser ein Kohlendioxidlaser ist.

4. Scheinwerfer nach einem der Ansprüche 1 bis 3,
**dadurch gekennzeichnet, dass**
der Scheinwerfer einen Reflektor (30) zur Bündelung des Lichtes der Lichtquelle umfasst, wobei der Reflektor (30) von dem Gehäuse umschlossen wird.

5. Scheinwerfer nach Anspruch 4,
**dadurch gekennzeichnet, dass**
der Reflektor (30) derart angeordnet und/oder ausgebildet ist, dass das Licht der Lichtquelle wenigstens teilweise in Richtung das Zeichen und/oder Lasergravur gelenkt wird und das Zeichen und/oder die Lasergravur ausleuchtet.

6. Scheinwerfer nach Anspruch 5,
**dadurch gekennzeichnet, dass**
die Lasergravur nicht verfärbt ist und einen Kontrast aufgrund der Lichtstreuung an der rauen Oberfläche ausbildet.

7. Scheinwerfer nach einem der Ansprüche 1 bis 6,
**dadurch gekennzeichnet, dass**
das Gehäuse wenigstens einen ersten (5.1) und einen zweiten Gehäuseteil (5.2) umfasst, wobei der erste Gehäuseteil (5.1) den Reflektor umschließt und das Zeichen aufweist.

8. Scheinwerfer nach Anspruch 7,
**dadurch gekennzeichnet, dass**
das erste Gehäuseteil (5.1) als Ring ausgebildet ist.

9. Scheinwerfer nach einem der Ansprüche 1 bis 8,
**dadurch gekennzeichnet, dass**
die wenigstens eine Lichtquelle eine LED, bevorzugt mit einer Leistung von mehr als 10 Lux, insbesondere einer Leistung im Bereich 10 Lux bis 150 Lux, bevorzugt mit Abblendlichtfunktion und/oder Fernlichtfunktion und/oder Tagfahrlichtfunktion umfasst.

10. Scheinwerfer nach einem der Ansprüche 1 bis 9,
**dadurch gekennzeichnet, dass**
der Scheinwerfer einen Außenreflektor umfasst.

11. Verfahren zum Einbringen eines Zeichens in die intransparente Beschichtung des Gehäuses des Scheinwerfers gemäß einem der Ansprüche 1 bis 10, **dadurch gekennzeichnet, dass** die Beschichtung entfernt wird, ergebend ein Zeichen, insbesondere ein Logo und das Entfernen der Beschichtung durch Laser erfolgt.

12. Verfahren nach Anspruch 11,
**dadurch gekennzeichnet, dass**
zusätzlich zur Entfernung der Beschichtung durch Laser eine Lasergravur in das Gehäuse eingebracht wird.

13. Verfahren nach einem der Ansprüche 11 bis 12,
**dadurch gekennzeichnet, dass**
die Beschichtung einer Primer Lackierung und die für sichtbares Licht intransparente Lackierung umfasst.

## Claims

1. Headlamp (1) for a two-wheeled vehicle, in particular a bicycle, comprising at least one housing and at least one light source arranged in the housing, wherein at least part of the housing consists of a material which is transparent to light, in particular visible light, and at least part of the housing is provided with a coating (102) which is opaque to light, in particular visible light, wherein the opaque coating (102) is removed from the housing in order to display a sign, such that the sign, in particular a logo (20), preferably a lettering, is illuminated by the at least one light source through the transparent material, **characterized in that**
the coating comprises an opaque lacquering, in particular a lacquering which is opaque to visible light, in particular a black lacquering (102) and a primer lacquering (101), and the coating, in particular the opaque lacquering (102), preferably and/or also the primer lacquering (101) can be removed by a laser, wherein the transparent material of the housing is PMMA and a laser engraving is introduced into the transparent material of the housing.

2. Headlamp according to claim 1, **characterized in that** the PMMA is a cast quality PMMA.

3. Headlamp according to claim 1 or 2, **characterized in that** the laser is a carbon dioxide laser.

4. Headlamp according to one of claims 1 to 3, **characterized in that** the headlamp comprises a reflector (30) for focusing the light of the light source, wherein the reflector (30) is enclosed by the housing.

5. Headlamp according to claim 4, **characterized in that** the reflector (30) is arranged and/or designed in such a way that the light of the light source is at least partially directed towards the sign and/or laser engraving and illuminates the sign and/or laser engraving.

6. Headlamp according to claim 5, **characterized in that** the laser engraving is not discolored and forms a contrast due to the light scattering on the rough surface.

7. Headlamp according to one of claims 1 to 6, **characterized in that** the housing comprises at least a first (5.1) and a second housing part (5.2), wherein the first housing part (5.1) encloses the reflector and comprises the sign.

8. Headlamp according to claim 7, **characterized in that** the first housing part (5.1) is formed as a ring.

9. Headlamp according to one of claims 1 to 8, **characterized in that** the at least one light source comprises an LED, preferably with a power of more than 10 lux, in particular a power in the range 10 lux to 150 lux, preferably with low-beam function and/or high-beam function and/or daytime running light function.

10. Headlamp according to one of claims 1 to 9, **characterized in that** the headlamp comprises an external reflector.

11. Method for introducing a sign into the opaque coating of the housing of the headlamp according to one of claims 1 to 10, **characterized in that** the coating is removed, resulting in a sign, in particular a logo, and the removal of the coating is carried out by laser.

12. Method according to claim 11, **characterized in that** in addition to the removal of the coating by laser, a laser engraving is introduced into the housing.

13. Method according to one of claims 11 to 12, **characterized in that** the coating comprises a primer lacquering and the lacquering which is opaque to visible light.

## Revendications

1. Phare (1) pour un deux-roues, en particulier une bicyclette, comprenant un boîtier ainsi qu'au moins une source lumineuse disposée dans le boîtier, dans lequel au moins une partie du boîtier se compose d'un matériau transparent à la lumière, en particulier à la lumière visible, et au moins une partie du boîtier est munie d'un revêtement (102) non transparent à la lumière, en particulier à la lumière visible, dans lequel le revêtement non transparent (102) est enlevé du boîtier pour exposer un symbole, de telle sorte que le symbole, en particulier un logo (20), de préférence une écriture, soit éclairé par l'au moins une source lumineuse à travers le matériau transparent, **caractérisé en ce que** le revêtement comprend une peinture non transparente, en particulier une peinture non transparente à la lumière visible, en particulier une peinture noire (102) et une peinture d'apprêt (101), et le revêtement, en particulier la peinture non transparente (102) et/ou la peinture d'apprêt (101), peut être enlevé à l'aide d'un laser, le matériau transparent du boîtier étant du PMMA et une gravure par laser étant formée dans le matériau transparent du boîtier.

2. Phare selon la revendication 1, **caractérisé en ce que** le PMMA est du PMMA de qualité moulée.

3. Phare selon la revendication 1 ou 2, **caractérisé en ce que** le laser est un laser au dioxyde de carbone.

4. Phare selon l'une des revendications 1 à 3, **caractérisé en ce que** le phare comprend un réflecteur (30) pour focaliser la lumière de la source lumineuse, lequel réflecteur (30) et entouré par le boîtier.

5. Phare selon la revendication 4, **caractérisé en ce que** le réflecteur (30) est disposé et/ou conçu de telle manière que la lumière de la source lumineuse soit dirigée au moins en partie en direction du symbole et/ou de la gravure par laser et éclaire le symbole et/ou la gravure par laser.

6. Phare selon la revendication 5, **caractérisé en ce que** la gravure par laser n'est pas colorée et forme un contraste en raison de la diffusion de la lumière sur la surface rugueuse.

7. Phare selon la l'une des revendications 1 à 6, **caractérisé en ce que** le boîtier comprend au moins une première partie de boîtier (5.1) et une deuxième (5.2), la première partie de boîtier (5.1) entourant le réflecteur et présentant le symbole.

8. Phare selon la revendication 7, **caractérisé en ce que** la première partie du boîtier (5.1) est conformée comme un anneau.

9. Phare selon l'une des revendications 1 à 8, **caractérisé en ce que** l'au moins une source lumineuse est une DEL, de préférence d'une puissance de plus de 10 lux, en particulier d'une puissance comprise entre 10 lux et 150 lux, de préférence avec une fonction de feu de croisement et/ou une fonction de feu longue portée et/ou une fonction de feu de jour.

10. Phare selon l'une des revendications 1 à 9, **caractérisé en ce que** le phare comprend un réflecteur externe.

11. Procédé pour former un symbole dans le revêtement non transparent du boîtier du phare selon l'une des revendications 1 à 10, **caractérisé en ce que** le revêtement est enlevé, ce qui produit un symbole, en particulier un logo, et l'enlèvement du revêtement est réalisé à l'aide d'un laser.

12. Procédé selon la revendication 11, **caractérisé en ce qu'**outre l'enlèvement du revêtement à l'aide du laser, une gravure par laser est réalisée dans le boîtier.

13. Procédé selon l'une des revendications 11 à 12, **caractérisé en ce que** le revêtement comprend une peinture d'apprêt et la peinture non transparente à la lumière visible.
